# EUROPÄISCHE PATENTSCHRIFT

(11) **EP 0 241 708 B1**
(45) Veröffentlichungstag und Bekanntmachung des Hinweises auf die Patenterteilung: **22.06.1994**
(21) Anmeldenummer: 87103494.8
(22) Anmeldetag: 11.03.1987
(51) Int. Cl.: F16B 13/14, E04G 23/02

(54) **In vorgebohrte Löcher einzusetzender Injektionsanker**
Injection anchor to be inserted into pre-drilled holes
Douille d'ancrage à injection à insérer dans des trous préforés

(30) Priorität: 15.03.1986 DE 3608775
(43) Veröffentlichungstag der Anmeldung: 21.10.1987
(73) Patentinhaber: INTERNATIONAL INTEC PATENT HOLDING ESTABLISHMENT, FL-9490 Vaduz (LI)
(72) Erfinder: Harke, Alfons, B-1790 Afflingem-Hekelgem (BE)
(74) Vertreter: Peerbooms, Rudolf, Dipl.-Phys.

(56) Entgegenhaltungen:
- DE-A- 3 218 036
- DE-A- 3 225 051
- DE-U- 7 024 434
- FR-A- 2 328 877
- GB-A- 2 024 978

## Beschreibung

Die Erfindung betrifft einen in vorgebohrte Löcher einzusetzenden Injektionsanker, der aus einem, am hinteren Stirnende verschlossenen Rohr, das mit mindestens einem radialen Austrittsloch für die Injektionsmasse versehen ist, und aus einem elastischen, das Rohr umschließenden Mantel besteht.

Durch das DE-GM 70 24 434 ist ein Injektionsanker bekannt, der ein glattwandiges Rohr aufweist, welches mit runden oder langlochartigen Austrittslöchern für die Injektionsmasse versehen ist, wobei um das Rohr ein Armierungsdraht gewickelt ist, der durch das Rohr umschließende und mit dem Rohr verbundene Ringe in seiner Lage fixiert ist. Auf einem Teil seiner Länge trägt das dortige Rohr bzw. seine Bewehrungswicklung einen elastischen Mantel, der beispielsweise bei Hohlblocksteinen oder Lochziegeln verhindern soll, daß Injektionsmasse unkontrolliert in Hohlräume verkriecht. Der bekannte Injektionsanker ist aber aufgrund seines vielteiligen Aufbaus verhältnismäßig teuer in der Herstellung und umständlich in der Handhabung. Der äußere Mantel kann beim Einschieben in ein Bohrloch verrutschen, so daß er seine Absperrfunktion gegenüber mauerwerkseitigen Hohlräumen verliert. Darüber hinaus ist die Auszugsfestigkeit des glattwandigen Rohres aus dem Injektionspfropfen nur sehr begrenzt.

Es sind ferner Injektionsanker bekannt, die aus einer Vollmaterialstange bestehen, die entweder einen eingebohrten Injektionskanal oder außen längs der Ankerstange verlaufende Injektionsröhrchen aufweisen. Auch diese bekannten Ausführungsformen sind verhältnismäßig teuer in der Herstellung.

Der Erfindung liegt die Aufgabe zugrunde, einen Injektionsanker zu schaffen, der preiswert als Massenartikel herstellbar ist, dessen Handhabung einfach ist und der eine hohe Auszugsfestigkeit besitzt, und zwar sowohl hinsichtlich des gesamten Injektionspfropfens aus der vorgebohrten Bohrung als auch hinsichtlich des Auszuges des Rohres aus dem Injektionspfropfen heraus.

Ausgehend von einem gattungsgemäßen Injektionsanker wird die Lösung dieser Aufgabe erfindungsgemäß dadurch erreicht, daß das Rohr über seine Länge hinweg mit sich diametral gegenüberliegenden, abgerundeten Eindrückungen versehen ist und, mit Ausnahme seiner rundbelassenen Endabschnitte, jeweils abwechselnde flach-ovale Querschnittsbereiche und etwa runde oder fast runde Querschnittsbereiche aufweist und daß der elastische Mantel als ein über die gesamte Länge des Rohres sich erstreckender Schlauch ausgebildet ist, der mit seinen Enden jeweils in die Rohrenden eingestülpt und mittels nietartiger Befestigungsmittel am Rohr festgeklemmt ist.

Ein solcher Injektionsanker ist nur aus wenigen Teilen ausgebaut, wobei für das Rohr abgelängte Stücke händelsüblicher Rohre und für den elastischen Mantel abgelängte Schlauchstücke verwendet werden können, wobei der Mantel vorteilhafterweise aus textilem Gewebe oder Gewirke besteht, das bis zu einem bestimmten Maße radial aufweitbar ist. Rohr und Mantel sind unter Verwendung einfacher, nietartiger Befestigungsmittel sicher miteinander verbunden, so daß der Mantel beim Einschieben in ein Bohrloch nicht verrutschen kann. Beim Einpressen der Injektionsmasse wird der Mantel an die Bohrlochwandung angepreßt, wobei durch den für die Injektionsmasse begrenzt durchlässigen Mantel Injektionsmasse hindurchtritt, so daß eine adhäsive Verbindung mit der Bohrlochwandung erreicht wird. Der Mantel beult sich dabei in Hohlräume aus, so daß der gebildete Injektionspfropfen auch formschlüssig im Mauerwerk oder dgl. gehalten ist. Das Rohr sitzt aufgrund seiner vielen Eindrückungen ebenfalls formschlüssig in dem sich innerhalb und außerhalb des Rohres ausbildenden Injektionspfropfen, so daß das Rohr selbst eine hohe Auszugsfestigkeit aufweist. Durch die Eindrückungen erfährt das Rohr eine Materialvorreckung, so daß sich das gewellte Rohr auch nicht unter hohen Zugbelastungen rückverformt. Der Injektionsanker läßt sich somit als billiger Massenartikel in Längen bis zu mehreren Metern und mit Durchmessern von mehreren Zentimetern, z. B. fünf Zentimetern, herstellen und er ist in seiner Handhabung narrensicher.

Gemäß einer bevorzugten Ausführungsform der Erfindung kann vorgesehen werden, daß das Rohr im Bereich der sich gegenüberliegenden Eindrückungen auf etwa halben Druchmesser eingeengt ist und daß das Rohr kontinuierlich, d. h. unter Vermeidung scharfer Kanten, gewellt ist. Durch diese Formgebung werden örtliche Spitzenbelastungen bei auf den Anker ausgeübten Zug-oder Druckkräften vermieden, so daß der Gefahr eines Brechens des Rohres oder des Injektionspfropfens vorgebeugt ist.

Vorteilhafterweise werden an beiden Enden die gleichen nietartigen Befestigungsmittel verwendet, die einen Druchgangskanal aufweisen, wobei in das hintere Befestigungsmittel ein Verschlußstück eingepreßt ist, welches somit die Festklemmung des eingestülpten Schlauchendes am Rohr noch verbessert.

Am vorderen Anker kann der eingestülpte Schlauch einen über den Schaft des Befestigungsmittels in das Rohr hineinragenden Endabschnitt aufweisen, der beim Absetzen des Spritzgerätes als Rückschlagventil wirkt und ein Auslaufen der Injektionsmasse verhindert.

Nach weiteren Merkmalen der Erfindung kann vorgesehen werden, daß das Rohr nahe am hinteren Ende mit einem größeren Austrittsloch und über seine Länge verteilten mit vergleichsweise kleineren Austrittslöchern versehen ist. Durch diese Maßnahmen wird einerseits sichergestellt, daß die Injektionsmasse nahe des hinteren Endes des Injektionsankers in den Bohrlochraum austritt und diesen von hinten nach vorne hin allmählich füllt. Andererseits wird aber insbesondere bei schnellabbindenden Injektionsmassen durch die vorderen, kleinen Löcher sichergestellt, daß auch dann noch der gesamte Bohrlochraum mit Injektionsmasse gefüllt wird.

In Weiterbildung der Erfindung kann vorgesehen werden, daß zwischen dem Nietkopf der Befestigungsmittel und den Rohrenden jeweils eine dem Bohrlochdurchmesser angepaßte Positionierscheibe eingeklemmt ist. Durch diese Positionierscheibe wird eine koaxiale Ausrichtung des Injektionsankers auf das Bohrloch gewährleistet.

Dem Injektionsanker können der Erfindung zufolge ferner noch in das Rohr einsteckbare Anschlußbolzen zugeordnet sein, deren vorderer Teil eine nicht glatte Oberfläche, z.B. ein Außengewinde, aufweist. Diese Anschlußbolzen werden noch vor vollständigem Aushärten der Injektionsmasse in das Rohr eingesteckt, und das herausragende Ende des Anschlußbolzens kann je nach seiner Ausbildung als Haken, öse usw. zur Befestigung oder Aufhängung weiterer Bauteile verwendet werden.

Ferner kann der Erfindung zufolge noch vorgesehen werden, daß das Rohr an seinem vorderen Ende eingebördelt ist, daß das Befestigungsmittel mit hoher Klemmkraft in das Rohr eingesteckt und sein Schaft mit einer Innengewindebohrung versehen ist. Bei der Massenproduktion ergibt sich hier immer ein annähernd gleich stabiler Sitz des Befestigungsmittels am Rohr, wobei die Zugkraft, mit der das Befestigungsmittel vom Rohr mittels eines geeigneten Werkzeuges abgezogen werden kann, gleich oder etwas größer gewählt wird als die verlangte Mindestauszugsfestigkeit des Injektionsankers. Es ist somit möglich, eingesetzte Injektionsanker auf ihre Auszugsfestigkeit zu prüfen, in dem man das vordere Befestigungsmittel vom Rohr abzieht. Man kann auf diese Weise zerstörungsfrei prüfen, ob die gesetzten Injektionsanker die vorgeschriebene Auszugsfestigkeit besitzen.

Ausgehend von einem gattungsgemäßen Injektionsanker ist erfindungsgemäß als alternative Lösung vorgesehen, daß das Rohr zumindest auf einem großen Teil seiner Länge mit sich diametral gegenüberliegenden, abgerundeten Eindrückungen versehen ist und, mit Ausnahme seiner rundbelassenen Endabschnitte, jeweils abwechselnd flach-ovale Querschnittsbereiche und runde oder fast-runde Querschnittsbereiche aufweist, und daß der Mantel als ein längselastischer Schlauch oder Strumpf ausgebildet ist, der einerseits am Einschubende des Rohres befestigt und andererseits an einem Flanschring befestigt ist, der verschieblich auf einem vorderen, rundbelassenen Abschnitt des Rohres verschiebbar gelagert ist.

Durch diese Maßnahmen ist ein Injektionsanker erreicht, der wahlweise vollkommen oder mehr oder weniger weit vorragend in ein Bohrloch eingesteckt werden kann. Sein ggfs. herausragendes Ende kann zum Anschluß weiterer Elemente genutzt und z.B. zu einer Tragkonsole ergänzt werden.

In den Unteransprüchen 10 bis 14 sind weitere Merkmale angegeben, durch die eine optimale Bruch- und Zugfestigkeit, insbesondere Formbeständigkeit gegenüber Zugkräften, und eine gute Einbettung des Injektionsankers in der Injektionsmasse erreicht werden.

Die Erfindung wird im folgenden anhand der Zeichnung näher beschrieben, in der zeigen:
- Fig. 1: in Draufsicht einen Injektionsanker nach der Erfindung,
- Fig. 2: den Injektionsanker in einem Längsschnitt,
- Fig. 3: eine Draufsicht auf das Rohr des Injektionsankers, in Fig. 2 in Richtung des Pfeiles III gesehen,
- Fig. 4: einen Schnitt gemäß der Linie IV-IV in Fig. 3,
- Fig. 5: einen Schnitt gemäß der Linie V-V in Fig. 3,
- Fig. 6: ein Beispiel für die Anwendung des Injektionsankers bei einem zweischaligen Mauerwerk,
- Fig. 7: eine abgewandelte Ausführungsform in Verbindung mit einem Anwendungsbeispiel,
- Fig. 8: eine abgewandelte Ausführungsform für das vordere Ende des Injektionsankers,
- Fig. 9: eine alternative Ausführungsform in Verbindung mit einem Anwendungsbeispiel,
- Fig. 10: die Ausführungsform nach Fig. 9 in Verbindung mit einem anderen Anwendungsbeispiel,
- Fig. 11 bis 14: mehrere Ansichten auf das Rohr eines Injektionsankers nach der Erfindung.

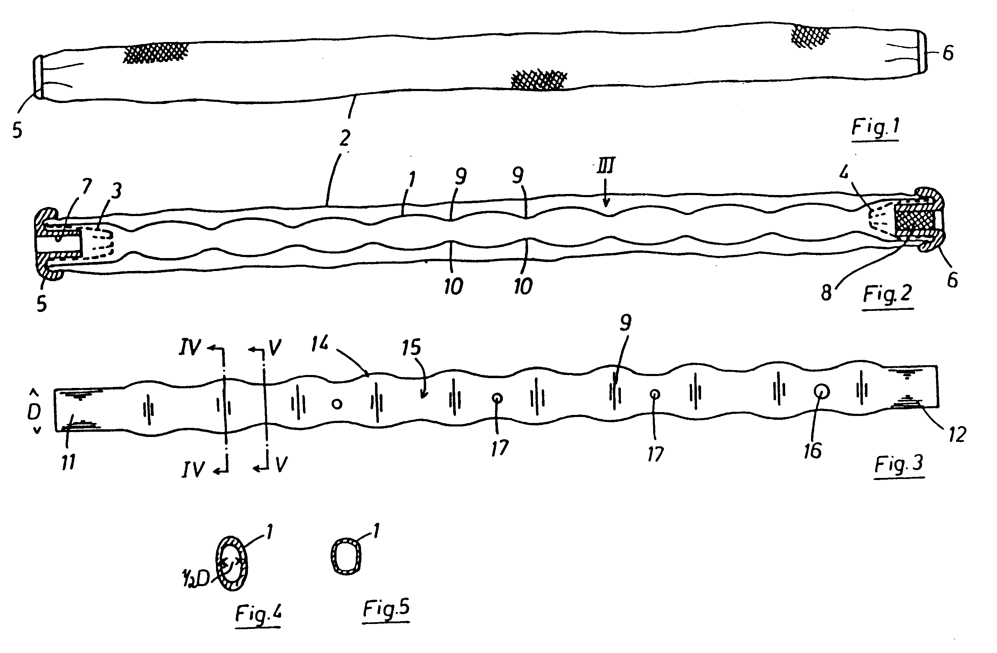

Der in den Fig. 1 bis 5 gezeigte Injektionsanker besteht aus einem Rohr 1 und einem sich über die gesamte Länge des Rohres erstreckenden elastischen Mantel 2, dessen Enden 3, 4 in die Rohrenden eingestülpt sind und mittels nietartiger Befestigungselemente 5, 6 am Rohr festgeklemmt sind. Die nietartigen Befestigungsmittel weisen jeweils einen Durchgangskanal 7 auf, und in den Durchgangskanal des hinteren Befestigungsmittels ist ein Verschlußstück 8 stramm eingepreßt.

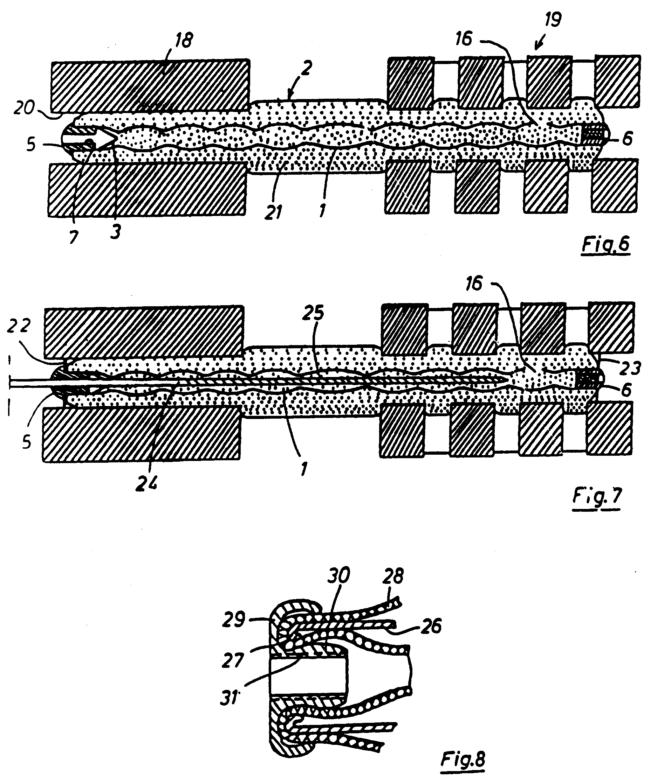

Bei dem Rohr 1 handelt es sich beispielsweise um ein Stahlrohr von 10 Millimetern Durchmesser und 1 Millimeter Wandstärke. Das Rohr 1 ist über seine Länge hinweg in regelmäßigen Abständen mit sich gegenüberliegenden, abgerundeten Eindrückungen 9, 10 versehen und weist, mit Ausnahme seiner rundbelassenen Endabschnitte 11, 12, jeweils abwechselnd einen flach-ovalen Querschnittsbereich 14 gemäß Querschnittsdarstellung nach Fig. 4 und einen etwa runden oder fast-runden Querschnittsbereich 15 gemäß Querschnittsdarstellung nach Fig. 5 auf. Im Bereich der Eindrückungen 9, 10 ist das Rohr bis auf etwa halben Rohrdurchmesser D eingeengt. Die Eindrückungen sind derart vorgenommen, daß das Rohr kontinuierlich gewellt ist. Nahe seines hinteren Endes ist das Rohr mit einem größeren radialen Austrittsloch 16 versehen, und über seine Länge hinweg, sind mehrere vergleichsweise kleinere Austrittslöcher 17 verteilt.

Fig. 6 veranschaulicht ein Anwendungsbeispiel des Injektionsankers nach den Fig. 1 bis 5. In einem aus den beiden Schalen 18, 19 bestehenden Mauerwerk sind Bohrlöcher 20 vorgebohrt, in die der Injektionsanker eingeschoben ist. Durch den Durchgangskanal des vorderen nietartigen Befestigungsmittels 5 hindurch, ist Injektionsmasse eingepreßt worden, die zunächst den Innenraum des Rohres 1 füllt, dann durch die Austrittsbohrung 16 und ggfs. durch die Austrittsbohrungen 17 radial nach außen tritt und den elastischen Mantel 2 einerseits bis Anlage an die Bohrlochwandung spreizt und andererseits eine Ausbeulung des elastischen Mantels 2 in Hohlräume bewirkt. In der Praxis werden meist verhältnismäßig schnell abbindende Injektionsmassen verwendet, so daß nach Absetzen des Spritzgerätes kein größerer Rückflußdruck besteht. Die durch das vordere Befestigungsmittel 5 hindurchgestülpten Endabschnitte 3 des elastischen Schlauches sperren zudem den Durchlaßkanal 7 gegen einen Rückfluß nach Art eines Rückschlagventils ab. Nach Aushärten der Injektionsmasse sitzt sowohl das Rohr 1 formschlüssig im Injektionsmassepfropfen 21 und ist dieser Pfropfen aufgrund der Ausbeulungen ebenfalls formschlüssig an den Mauerwerksschalen 19, 20 gehalten, so daß der Anker eine hohe Auszugsfestigkeit besitzt.

Beim Ausführungsbeispiel nach Fig. 7 ist zwischen dem Nietkopf der Befestigungsmittel 5, 6 und den Enden des Rohres 1 noch jeweils eine Positionierscheibe 22, 23 eingeklemmt, die etwa dem Durchmesser des Bohrloches 20 angepaßt ist und eine koaxiale Ausrichtung des Rohres 1 sicherstellen. Ferner ist in Fig. 7 noch ein in das Rohr 1 von vorne eingesteckter oder eingeschraubter Anschlußbolzen 24 gezeigt, der in seinem vorderen Bereich eine nicht-glatte Oberfläche, z.B. ein Außengewinde 25 trägt und dessen aus dem Rohr 1 herausragendes Ende je nach Ausbildung als Haken, öse, Gewindestange usw. zur Anbringung weiterer Elemente verwendet werden kann.

Beim Ausführungsbeispiel nach Fig. 8 ist das Rohr 26 an seinem vorderen Ende mit einem eingebördelten Rand 27 versehen und ist zur Festklemmung des eingestülpten Schlauches 28 ein nietartiges Befestigungselement 29 versehen, dessen Schaft einwärts der Bördelung 27 eine Verbreiterung 30 aufweist und mit hohem Klemmdruck in das Rohr 26 eingepreßt ist. Der Durchgangskanal des Befestigungselementes 29 ist hier mit einem Innengewinde 31 versehen, in das ein Ausziehwerkzeug eingeschraubt werden kann. Wenn der Injektionsanker gemäß Fig. 8 in ein Bohrloch eingesetzt ist, wird nach der Aushärtezeit seine Auszugsfestigkeit geprüft, indem mittels des Ausziehwerkzeuges ein solcher Zug auf das Befestigungselement 29 ausgeübt wird, daß dieses vom Rohr 26 abgezogen wird. Wenn die Auszugsfestigkeit des Ankers im Mauerwerk zu gering ist, wird der Injektionsanker bei einem solchen Prüfvorgang mit herausgezogen. Wird dagegen nur das Befestigungselement 29 abgezogen, hat man zerstörungsfrei die ausreichende Auszugsfestigkeit des gesetzten Injektionsankers überprüft.

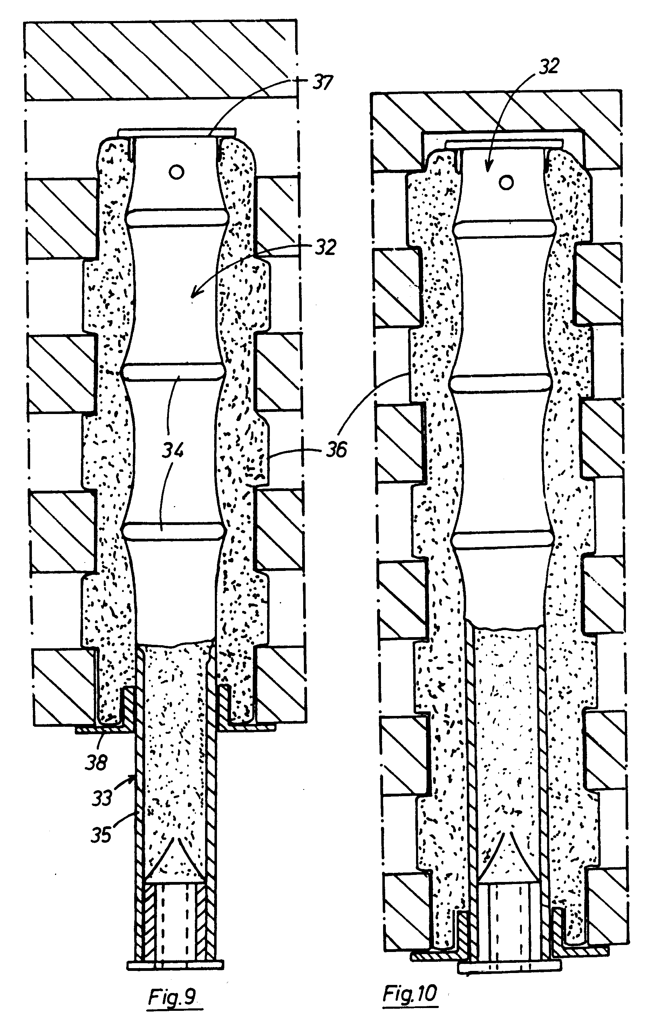

Die Fig. 9 und 10 zeigen eine alternative Ausführungsform eines Injektionsankers 32, dessen Rohr 33 nur in seinem hinteren, in ein Bohrloch eingesteckten Bereich mit parallel zueinander ausgerichteten Eindrückungen 34 versehen ist, und daß vorne einen fast gleich langen, rundbelassenen Abschnitt 35 aufweist. Das Rohr ist von einem elastischen Schlauch 36 umgeben, der am hinteren Ende 37 des Rohres dicht befestigt, z.B. angeklebt oder angeklemmt ist. An seinem vorderen Ende ist der Schlauch 36 dicht an einem Ringflansch 38 befestigt, der längsverschieblich auf dem vorderen, rundbelassenen Abschnitt 35 des Rohres gelagert ist. Der Schlauch 36 ist nicht nur radial-, sondern auch längselastisch und ist von Hause aus kürzer als das Rohr 33, wie aus Fig. 9 ersichtlich ist. In Fig. 9 ist der Injektionsanker nur teilweise bis zur Anlage seines Ringflansches 38 an der Bohrlochmündung in das Bohrloch eingesteckt und ragt sein rundbelassener vorderer Abschnitt 35 ein weites Stück noch aus dem Bohrloch heraus. Fig. 10 zeigt den gleichen Injektionsanker wie in Fig. 9, jedoch ist der Injektionsanker hier vollständig in ein entsprechend tieferes Bohrloch eingesteckt, wobei der längselastische Schlauch 36 in der gezeigten Weise auf die Länge des Rohres 33 ausgelängt worden ist.

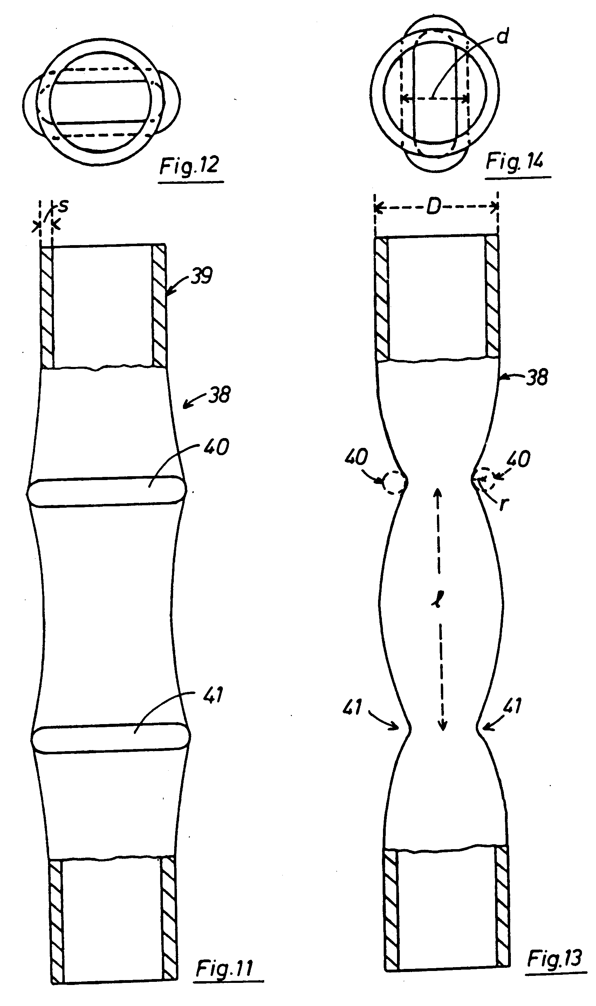

Die Fig. 11 bis 14 zeigen in mehreren Ansichten ein für Injektionsanker nach der Erfindung bestimmtes Rohr 39, das hier mit jeweils zwei Paaren von sich gegenüberliegenden Eindrückungen 40, 40 und 41, 41 versehen ist und an dem die optimalen geometrischen Abmessungen erläutert sind. Der Krümmungsradius r des Grundes der Eindrückungen 40, 41 ist hier etwa gleich der Wandstärke s des Rohres. Dies wird durch Verwendung eines Drückwerkzeuges erreicht, dessen Scheitelkrümmung diesen Radius r aufweist.

Der Abstand l zwischen zwei benachbarten Eindrückungen 40, 41 beträgt hier etwa das Doppelte des Außendurchmessers D des Rohres. Das Rohr ist im Bereich der sich gegenüberliegenden Eindrückungen bis auf eine Dicke d von etwa 55% seines Rohrdurchmessrs D eingeengt.

## Patentansprüche

1. In vorgebohrte Löcher einzusetzender Injektionsanker, bestehend aus einem am hinteren Stirnende verschlossenen Rohr, das mit mindestens einem radialen Austrittsloch für die Injektionsmasse versehen ist, und aus einem elastischen, das Rohr umschließenden Mantel, dadurch gekennzeichnet, daß das Rohr (1) über seine Länge hinweg mit sich diametral gegenüberliegenden, abgerundeten Eindrückungen (9, 10) versehen ist und, mit Ausnahme seiner rundbelasssenen Endabschnitte (11, 12), jeweils abwechselnd flach-ovale Querschnittsbereiche (14) und runde oder fast-runde Querschnittsbereiche (15) aufweist, und daß der elastische Mantel (2) als ein über die gesamte Länge des Rohres (1) sich erstreckender Schlauch ausgebildet ist, der mit seinen Enden (3, 4) jeweils in die Rohrenden eingestülpt und mittels nietartiger Befestigungsmittel (5, 6) am Rohr (1) festgeklemmt ist.

2. Injektionsanker nach Anspruch 1, dadurch gekennzeichnet, daß das Rohr (1) im Bereich der sich gegenüberliegenden Eindrückungen (9, 10) auf etwa halben Rohrdruchmesser (D) eingeengt ist und daß das Rohr (1) kontinuierlich gewellt ist.

3. Injektionsanker nach den Ansprüchen 1 oder 2, dadurch gekennzeichnet, daß die nietartigen Befestigungsmittel (5, 6) einen Durchgangskanal (7) aufweisen und daß in das hintere Befestigungsmittel (6) ein Verschlußstück (8) eingepreßt ist.

4. Injektionsanker nach den Ansprüchen 2 oder 3, dadurch gekennzeichnet, daß beim vorderen Ankerende der eingestülpte Schlauch einen über den Schaft des Befestigungsmittels (5) in das Rohr (1) hineinragenden, als Rückschlagventil ausgebildeten Endabschnitt (13) aufweist.

5. Injektionsanker nach einem oder mehreren der vorangegangenen Ansprüche, dadurch gekennzeichnet, daß das Rohr (1) nahe am hinteren Ende mit einer größeren Austrittsbohrung (16) und über seine Länge verteilt mit vergleichsweise kleineren Austrittslöchern (17) versehen ist.

6. Injektionsanker nach einem der Ansprüche 1 bis 7, gekennzeichnet durch ein in das Rohr (1) einsteckbaren Anschlußbolzen (24), dessen Einsteckende eine nicht-glatte Oberfläche, z.B. ein Außengewinde (25), aufweist.

7. Injektionsanker nach einem der Ansprüche 1 bis 6, dadurch gekennzeichnet, daß zwischen dem Nietkopf der Befestigungsmittel (5, 6) und den Enden des Rohres (1) jeweils eine dem Bohrlochdurchmesser angepaßte Positionierscheibe (22, 23) eingeklemmt ist.

8. Injektionsanker nach einem oder mehreren der Ansprüche 1 bis 7, dadurch gekennzeichnet, daß das Rohr (26) an seinem vorderen Ende einen eingebördelten Rand (27) aufweist, daß das Befestigungsmittel (29) mit hoher Klemmkraft in das Rohr eingesteckt ist und daß sein Schaft mit einer Innengewindebohrung (31) versehen ist.

9. In vorgebohrte Löcher einzusetzender Injektionsanker, bestehend aus einem am hinteren Stirnende verschlossenen Rohr, das mit mindestens einem radialen Austrittsloch für die Injektionsmasse versehen ist, und aus einem elastischen, das Rohr umschließenden Mantel, dadurch gekennzeichnet, daß das Rohr (33) zumindest auf einem großen Teil seiner Länge mit sich diametral gegenüberliegenden, abgerundeten Eindrückungen (34) versehen ist und, mit Ausnahme seiner rundbelassenen Endabschnitte, jeweils abwechselnd flach-ovale Querschnittsbereiche und runde oder fast-runde Querschnittsbereiche aufweist, und daß der Mantel als ein längselastischer Schlauch (36) oder Strumpf ausgebildet ist, der einerseits am Einschubende (37) des Rohres (33) befestigt und andererseits an einen Flanschring (38) befestigt ist, der verschieblich auf einem vorderen, rundbelassenen Abschnitt (35) dës Rohres (33) verschiebbar gelagert ist.

10. Injektionsanker nach Anspruch 1 oder 9, dadurch gekennzeichnet, daß der Krümmungsradius (r) des Bodens der Eindrückungen (40, 41) mindestens so groß wie die Wandstärke (s) des Rohres (39) und nicht größer als der halbe Durchmesser D des Rohres ist.

11. Injektionsanker nach Anspruch 10, dadurch gekennzeichnet, daß der Abstand (l) zwischen benachbarten Eindrückungen (40, 41) mindestens das Zweifache und höchstens das Vierfache des Durchmessers (D) des Rohres (39) beträgt.

12. Injektionsanker nach Anspruch 10 oder 11, dadurch gekennzeichnet, daß das Rohr (39) im Bereich der sich gegenüberliegenden Eindrückungen (40, 40) bis auf eine Dicke (d) von etwa 55% seines Rohrdurchmessers (D) eingeengt ist.

13. Injektionsanker nach Anspruch 9, dadurch gekennzeichnet, daß das Rohr (33) aus kontinuierlich gewellten und aus rundbelassenen Abschnitten besteht, wobei die Länge dieser rundbelassenen Abschnitte (35) mindestens gleich dem Doppelten des Abstandes (l) zwischen zwei benachbarten Eindrückungen (34) seines gewellten Abschnittes ist.

14. Injektionsanker nach Anspruch 1 oder 9, dadurch gekennzeichnet, daß das Rohr mit parallelen Eindrückungen und etwa mitten zwischen diesen jeweils mit einer hierzu rechtwinkligen Eindrückung versehen ist.

## Claims

1. Injection anchor to be inserted into pre-drilled holes, consisting of a pipe, closed off at its rear end and equipped with at least one radial exit-hole for the injection mass, and of an elastic sleeve surrounding the pipe, characterized in that the pipe (1) is equipped along its length with rounded surface-depressions (9,10) lying diametrically opposite one another, and, with the exception of its end sections (11,12) which are left round, has alternating areas of shallow-oval cross-section (14) and round or almost round cross-section (15), and in that the elastic sleeve (2) is designed as a hose, extending over the whole length of the pipe (1), whose ends (3,4) are turned over into the ends of the pipe and clamped to the pipe (1) by stud-like fasteners (5,6).

2. Injection anchor as claimed in Claim 1, characterized in that in the area of the surface-depressions (9,10) lying opposite one another the pipe (1) is narrowed to around half the pipe diameter (D) and in that the wall of the pipe (1) is continuously undulated.

3. Injection anchor as claimed in Claims 1 or 2, characterized in that the stud-like fasteners (5,6) have a channel (7) passing through them and in that a stopper (8) is pressed into the rear fastener (6).

4. Injection anchor as claimed in Claims 2 or 3, characterized in that at the front end of the anchor the folded-over hose has an end section (13) designed as a reflux-check-valve, projecting via the shaft of the fastener (5) into the pipe (1)

5. Injection anchor as claimed in one or more of the previous claims, characterized in that the pipe (1) is equipped near its rear end with a larger exit bore-hole (16) and over its length with relatively smaller exit bore-holes (17).

6. Injection anchor as claimed in one of Claims 1 to 5, characterized by an attachment rod (24) which may be inserted into the pipe (1), its insertion end having a non-smooth surface, e.g an exterior thread (25).

7. Injection anchor as claimed in one of Claims 1 to 6, characterized in that a positioning washer (22,23), appropriate to the diameter of the bore-hole, is fixed between the heads of each of the fastening studs (5,6) and the ends of the pipe (1).

8. Injection anchor as claimed in one or more of Claims 1 to 7, characterized in that the pipe (26) has at its front end a crimped edge (27), in that the fastener (29) is jammed forcibly into the pipe and in that its shaft is equipped with an interior threaded bore (31).

9. Injection anchor to be inserted into pre-drilled holes, consisting of a pipe, closed off at its rear end and equipped with at least one radial exit-hole for the injection mass, and of an elastic sleeve surrounding the pipe, characterized in that the pipe (33) is equipped at least along a large part of its length with rounded surface-depressions (34) lying diametrically opposite one another, and, with the exception of its end sections which are left round, has alternating areas of shallow-oval cross-section and round or almost round cross-section, and in that the sleeve is designed as a hose (36) or stocking, elastic in a longitudinal direction, which at one end is fastened to the insertion end (37) of the pipe (33) and whose other end is fastened to a flange ring (38), which is positioned so as to be slid or pushed along a forward section (35) of the pipe (33), which is left round.

10. Injection anchor as claimed in Claim 1 or 9, characterized in that the radius of curvature (r) of the base of the surface-depressions (40,41) is at least as great as the thickness (s) of the walls of the pipe (39) and not greater than half the diameter (D) of the pipe.

11. Injection anchor as claimed in Claim 10, characterized in that the distance (l) between adjacent surface-depressions (40,41) is at least double and at most four times the diameter (D) of the pipe (39).

12. Injection anchor as claimed in Claims 10 or 11, characterized in that the pipe (39) in the area of the surface-depressions (40,40) lying opposite one another is narrowed to a thickness (d) of about 55% of its own diameter (D).

13. Injection anchor as claimed in Claim 9, characterized in that the pipe (33) consists of sections which are continuously undulated and of sections which are left round, wherein the length of those areas which are left round (35) is at least double the distance (l) between two adjacent surface-depressions (34) in its undulated section.

14. Injection anchor as claimed in Claims 1 or 9, characterized in that the pipe is equipped with parallel surface-depressions and roughly halfway between each of these with a surface depression at right angles to them.

## Revendications

1. Douille d'ancrage à injection à insérer dans des trous prépercés, constituée d'un tube, obturé à l'extrémité frontale arrière, pourvu d'au moins un trou de sortie radial pour la masse d'injection et d'une enveloppe élastique, entourant le tube, caractérisé en ce que le tube (1) est pourvu sur sa longueur d'enfoncements (9, 10) arrondis, diamétralement opposés, à l'exception de ses sections d'extrémités (11, 12) laissées circulaires, en présentant chaque fois des alternances de zones de section transversale (14) plates-ovales, et des zones de section transversale (15) à peu près rondes ou presque rondes et en ce que l'enveloppe élastique (2) est réalisée sous forme d'un tuyau s'étendant sur toute la longueur du tube (1), rétreint, par ses extrémités (3, 4), à chacune des extrémités de tube et bloqué par serrage sur le tube (1), à l'aide de moyens de fixation (5, 6) du genre rivet.

2. Douille d'ancrage à injection selon la revendication 1, caractérisé en ce que le tube (1) est rétréci à à peu près la moitié de son diamètre (D) dans la zone des enfoncements (9, 10) opposés, et en ce que le tube (1) est dotée d'une ondulation continue.

3. Douille d'ancrage à injection selon la revendication 1 ou 2, caractérisé en ce que les moyens de fixation (5, 6) du genre rivet présentent un canal de passage (7), et en ce qu'une pièce de fermeture (8) est enfoncée sous pression dans le moyen de fixation (6) arrière.

4. Douilie d'ancrage à injection selon les revendications 2 ou 3, caractérisé en ce que, à l'extrémité avant de la douille d'ancrage, le tuyau rétreint présente une section d'extrémité (13) réalisée sous forme de clapet anti-retour et pénétrant dans tube (1), sur la queue du moyen de fixation (5).

5. Douille d'ancrage à injection selon l'une ou plusieurs des revendications précédentes, caractérisé en ce que le tube (1) est pourvu à proximité de son extrémité arrière d'un perçage de sortie (16) assez grand et de trous de sortie (17), comparativement plus petits, répartis sur sa longueur.

6. Douille d'ancrage à injection selon l'une des revendications 1 à 5, caractérisé par une broche de raccordement (24), enfichable dans le tube (1) et dont l'extrémité à enficher présente une surface non lisse, par exemple un filetage mâle (25).

7. Douille d'ancrage à injection selon l'une des revendications 1 à 6, caractérisé en ce qu'une rondelle de positionnement (22, 23) adaptée au diamètre du trou percé dans le tube est enserrée entre chacune des têtes de rivet des moyens de fixation (5, 6) et les extrémités du tube (1).

8. Douille d'ancrage à injection selon l'une des revendications 1 à 7, caractérisé en ce que le tube (26) présente sur son extrémité avant une bordure (27) rabattue vers l'intérieur, en ce que le moyen de fixation (29) est enfiché dans le tube avec une force de serrage élevée et en ce que sa queue est pourvue d'un trou taraudé (31).

9. Douille d'ancrage à injection à insérer dans des trous prépercés, constituée d'un tube, obturé à l'extrémité frontale arrière, pourvu d'au moins un trou de sortie radial pour la masse d'injection et d'une enveloppe élastique, entourant le tube, caractérisé en ce que le tube (33) est pourvu, au moins sur une grande partie de sa longueur, d'enfoncements (34) arrondis, diamétralement opposés, à l'exception de ses sections d'extrémités laissées circulaires, en présentant chaque fois des alternances de zones de section transversale plates-ovales, et des zones de section transversale à peu près rondes ou presque rondes et en ce que l'enveloppe est réalisée sous forme d'un tuyau (36) ou manchette à élasticité longitudinale, fixé d'un côté à l'extrémité d'insertion (37) du tube (33) et de l'autre côté à un anneau de bride (38), monté déplaçable sur une section avant (35) laissée ronde, du tube (33).

10. Douille d'ancrage à injection selon la revendication 1 ou 9, caractérisé en ce que le rayon de courbure (r) du fond des enfoncements (40, 41) est au moins de la valeur de l'épaisseur de paroi (s) du tube (39) et pas supérieur au demi diamètre D du tube.

11. Douille d'ancrage à injection selon la revendication 10, caractérisé en ce que l'espacement (l) entre enfoncements (40, 41) voisins est d'au moins le double et au plus du quadruple du diamètre (D) du tube (39).

12. Douille d'ancrage à injection selon la revendication 10 ou 11, caractérisé en ce que le tube (39) est rétréci dans la zone des enfoncements (40, 40) opposés, jusqu'à une épaisseur (d) d'à peu près 55 % de son diamètre (D).

13. Douille d'ancrage à injection selon la revendication 9, caractérisé en ce que le tube (33) est composé de sections à ondulations continues et de sections laissées rondes, la longueur de ces sections (35) laissées rondes est au moins égale au double de l'espacement (l) entre deux enfoncements (34) voisins de sa section ondulée.

14. Douille d'ancrage à injection selon la revendication 1 ou 9, caractérisé en ce que le tube est pourvu d'enfoncements parallèles et, à peu près au milieu de ceux-ci chaque fois d'un enfoncement orienté à angle droit par rapport à ceux-ci.
